# EUROPEAN PATENT SPECIFICATION

(11) **EP 4 083 540 B1**
(45) Date of publication and mention of the grant of the patent: **04.06.2025**
(21) Application number: 22170531.2
(22) Date of filing: 28.04.2022
(51) Int. Cl.: B60H 1/00, B60H 1/32, F25B 41/385, F25B 29/00, F25B 41/20, F25B 49/02

(54) **ELECTRIC VEHICLE CABIN HEATING SYSTEM AND CONTROL METHOD THEREFOR**
ELEKTRISCHES FAHRZEUGKABINENHEIZSYSTEM UND STEUERVERFAHREN DAFÜR
SYSTÈME DE CHAUFFAGE DE CABINE DE VÉHICULE ÉLECTRIQUE ET SON PROCÉDÉ DE COMMANDE

(30) Priority: 28.04.2021 CN 202110488856
(43) Date of publication of application: 02.11.2022
(73) Proprietor: Nio Technology (Anhui) Co., Ltd, Hefei City, Anhui 230601 (CN)
(72) Inventor: CHEN, Jinfeng, Hefei City, Anhui 230601 (CH)
(74) Representative: Patentanwaltskanzlei WILHELM & BECK

(56) References cited:
- DE-A1- 102018 201 945
- DE-A1- 102019 203 292
- KR-A- 20040 069 499
- US-A1- 2009 095 005

## Description

### Technical Field

The invention relates to the technical field of electric vehicles, and more particularly, to an electric vehicle cabin heating system and a control method therefor.

### Background Art

At present, electric vehicles have the advantages of saving energy and being environmental-friendly, and have received extensive attention in the world. However, due to the bottleneck of a battery technology, the current range of the electric vehicles is still unsatisfactory. After the start of an electric vehicle air conditioner, the reduction of the range becomes more serious. According to the existing study, the energy consumption of heating in winter may reduce the range of the electric vehicles by as high as about 50%, which is the most energy consuming part of auxiliary devices of the electric vehicles, seriously affecting the use of the electric vehicles.

Unlike traditional fuel vehicles, the electric vehicle do not have a constant heat source provided by engines, and therefore, most electric vehicles on the market use positive temperature coefficient resistance heaters for cabin heating. This form of heating efficiency is less than 1, the energy consumption of heating is high, the range of battery electric vehicles in winter is seriously affected, and the costs of current positive temperature coefficient resistors are high.

In addition to the positive temperature coefficient resistors, some battery electric vehicles currently have started using the solution of heat pump systems for cabin heating, as disclosed, for example, in the document DE 10 2018 201945 A1.

According to the inverse Carnot principle, the heating efficiency of the heat pump systems is always higher than 1, and the electric energy consumed by cabin heating will be greatly reduced compared with the positive temperature coefficient resistors, which is beneficial to improving of the range of the battery electric vehicles in winter. However, due to the limitation of the cycling characteristics of the heat pump systems themselves, the heating capacity of the heat pump systems also gradually decreases with the decrease of the ambient temperature, so even if the battery electric vehicle using the heat pump system is used, the positive temperature coefficient resistance heater is still used to supplement the heating capacity under the low temperature condition. Therefore, a whole air-conditioning system is required to simultaneously include a heat pump air conditioning system and a positive temperature coefficient resistance heater, and the system is complicated in structure and high in cost.

### Summary of the Invention

In order to overcome the above shortcomings in the prior art, the invention provides an electric vehicle cabin heating system and a control method thereof.

The technical solution provided by the invention according to claim 1 is that:
an electric vehicle cabin heating system,
the electric vehicle cabin heating system is an air conditioning and heating system, comprising: a first refrigerant circuit (S1) and a second refrigerant circuit (S2) that are connected in parallel, the first refrigerant circuit (S1) and the second refrigerant circuit (S2) each comprise: a gas-liquid separator (3) and a compressor (6) that are connected in series;
wherein, the first refrigerant circuit (S1) further comprises: a first expansion unit; the second refrigerant circuit (S2) further comprises: a second expansion unit and a condenser (9); the first expansion unit is connected to the second expansion unit and the condenser (9) in parallel; the second expansion unit comprises a second electronic expansion valve (5) and a third electronic expansion valve (8), the third electronic expansion valve (8) is arranged upstream of the condenser (9), and the second electronic expansion valve (5) is arranged downstream of the condenser (9); and
the electric vehicle cabin heating system is configured as a refrigerant in the second refrigerant circuit (S2) undergoes pressure regulation via the third electronic expansion valve (8) and then enters the condenser (9) to release heat for heating a cabin, and after the refrigerant released heat undergoing throttling via the second electronic expansion valve (5), it converges with the refrigerant which undergoes throttling and pressure reduction via the first expansion unit in the first refrigerant circuit (S1) in the gas-liquid separator (3), the converging refrigerant enters the compressor (6) for cycling.

Preferably, the cabin heating system further comprises: a control unit and a sensing unit;
The control unit is connected to the compressor, the first expansion unit, the second expansion unit and the sensing unit respectively, and controls the rotation speed of the compressor and the opening degrees of the first expansion unit and the second expansion unit by means of a signal sent by the sensing unit.

Preferably, the cabin heating system comprises a plurality of the sensing units respectively disposed on the first refrigerant circuit and the second refrigerant circuit.

Preferably, the sensing unit comprises: a first sensor, a second sensor, and a third sensor;

The first sensor is disposed between the gas-liquid separator and the compressor, the second sensor is disposed between the compressor and the first expansion unit, and the third sensor is disposed between the condenser and the second expansion unit.
Preferably, the first expansion unit comprises: a first electronic expansion valve.

Preferably, the cabin heating system further comprises: an air cycle unit;
The air cycle unit is disposed on one side of the condenser for cycling air in the cabin into the condenser for heating.

Preferably, the air cycle unit is specifically an air blower.

In another aspect according to claim 8, the invention further provides a control method for cabin heating of an electric vehicle, the control method comprises:
the first expansion unit and the second expansion unit receiving data fed back by a sensing unit;
performing of a determination result according to the data; and
regulating the opening degrees of the first expansion unit and the second expansion unit according to the determination result.

Preferably, regulating the opening degrees of the first expansion unit and the second expansion unit according to a determination result comprises:
when a low pressure at an inlet of the compressor fed back by the first sensor is lower than a low-pressure target value, increasing the opening degree of the first electronic expansion valve, and otherwise decreasing it;
when a high pressure at an outlet of the compressor fed back by the second sensor is lower than a high-pressure target value, decreasing the opening degree of the third electronic expansion valve, and otherwise increasing it; and
when the refrigerant subcooling degree at an outlet of the condenser fed back by the third sensor is lower than a subcooling degree target value, decreasing the opening degree of the second electronic expansion valve, and otherwise increasing it.

Compared with the prior art, the beneficial effects of the invention are that:
1. The invention provides an electric vehicle cabin heating system according to claim 1; rapid cabin heating and stable control of heating capacity in a large range are achieved under a low-temperature working condition by means of cycling of the refrigerant circuits, eliminating the dependence of the electric vehicle air-conditioning system on a positive temperature coefficient resistance heater, simplifying the structure of the air-conditioning system, and reducing the cost.
2. The invention provides, according to claim 8, a control method for cabin heating of an electric vehicle, comprising: a refrigerant in the second refrigerant circuit undergoing pressure regulation via the second expansion unit and then entering the condenser to release heat for heating a cabin; after the refrigerant in the first refrigerant circuit undergoing throttling and pressure reduction via the first expansion unit, converging with the refrigerant in the second refrigerant circuit in the gas-liquid separator, the converging refrigerant entering the compressor for cycling; The target high and low pressures of the system are controlled by regulating the first and second expansion units and the rotation speed of the compressor so as to achieve the decoupling between the regulation of system heating capacity and the temperatures and flow rate of exterior ambient air and cabin air, the regulation flexibility and the heat regulation range equivalent to those of positive temperature coefficient resistors are achieved, and the problems of insufficient heating capacity and frequent defrosting of a heat pump system at a low temperature are solved or improved to some extent.

### Brief Description of the Drawings

In order to illustrate the technical solutions in the invention more clearly, a brief introduction to the drawings required for the embodiments will be provided below. Obviously, the drawings in the following description are merely some of the embodiments of the invention.
Fig. 1 is a schematic diagram of an air conditioning and heating system of the invention; and
Fig. 2 is a schematic diagram of a cycle process of the air conditioning and heating system of the invention.

In the figures: 1-First electronic expansion valve; 2-First sensor; 3-Gas-liquid separator; 4-Control unit; 5-Second electronic expansion valve; 6-Compressor; 7-Second sensor; 8-Third electronic expansion valve; 9-Condenser; 10-Air blower; 11-Third sensor; S1-First refrigerant circuit; and S2-Second refrigerant circuit.

### Detailed Description of Embodiments

The technical solutions in the embodiments of the invention will be clearly and completely described below in conjunction with the accompanying drawings in the embodiments of the invention. Obviously, the described embodiments are merely some, rather than all of the embodiments of the invention.

The terms "steam" and "gas" or "liquid" and "liquid state" used in the embodiments generally mean that a refrigerant is in a gaseous state or a liquid state in a certain position, but do not exclude that the refrigerant is close to but not completely in a gas-liquid mixed state of the gaseous state and the liquid state, and those of ordinary skills in the art would have been able to judge the only possibility of the terms according to actual situations; in addition, the terms "high temperature", "high pressure", "low temperature" and "low pressure" designed in the invention are all common terms, specific refrigerants of "high temperature" and "high pressure" generally refers to the refrigerants coming out of a compressor and entering a main throttling apparatus in a cooling or heating cycle, the refrigerants of "low temperature" and "low pressure" generally refers to the refrigerant returning to the compressor after undergoing throttling by the main throttling apparatus and before being fed from a main inlet of the compressor, and the terms "condensing pressure" and "evaporating pressure" generally refers to the pressures corresponding to two phase states in which the refrigerants are condensed in a condenser and evaporated in an evaporator.

At present, electric vehicles have the advantages of energy saving and environmental protection, and are widely concerned all over the world. However, due to the bottleneck of a battery technology, the current range of the electric vehicles is still unsatisfactory. After the start of an electric vehicle air conditioner, the reduction of the range becomes more serious. According to the existing study, the energy consumption of heating in winter may reduce the range of the electric vehicles by as high as about 50%, which is the most energy consuming part of auxiliary devices of the electric vehicles, seriously affecting the use of the electric vehicles.

Unlike traditional fuel vehicles, the electric vehicle do not have a constant heat source provided by engines, and therefore, most electric vehicles on the market use positive temperature coefficient resistance heaters for cabin heating. This form of heating efficiency is less than 1, the energy consumption of heating is high, the range of battery electric vehicles in winter is seriously affected, and the costs of current positive temperature coefficient resistors are high.

In addition to the positive temperature coefficient resistors, some battery electric vehicles currently have started using the solution of heat pump systems for cabin heating. According to the inverse Carnot principle, the heating efficiency of the heat pump systems is always higher than 1, and the electric energy consumed by cabin heating will be greatly reduced compared with the positive temperature coefficient resistors, which is beneficial to improving of the range of the battery electric vehicles in winter. However, due to the limitation of the cycling characteristics of the heat pump systems themselves, the heating capacity of the heat pump systems also gradually decreases with the decrease of the ambient temperature, so even if the battery electric vehicle using the heat pump system is used, the positive temperature coefficient resistance heater is still used to supplement the heating capacity under the low temperature condition. Therefore, a whole air-conditioning system is required to simultaneously include a heat pump air conditioning system and a positive temperature coefficient resistance heater, and the system is complicated in structure and high in cost.

The energy consumption of the electric vehicle air-conditioning system heated by the positive temperature coefficient resistor is high, while the energy consumption of the air-conditioning system of the pure electric vehicle air-conditioning system heated by the heat pump air-conditioning system can be greatly reduced. However, due to the limitations of a heat pump cycle itself, even a heat pump system equipped with waste heat utilization, it cannot meet the requirements for rapid temperature rise and steady-state heating of a cabin at a low temperature. Also, there are problems, such as the heat pump system being in capable of starting under the low temperature condition, and frequent defrosting of the evaporator. Therefore, it is still necessary to provide a positive temperature coefficient resistance heater on an air-conditioning system architecture, causing that the whole air-conditioning system is complex in structure and high in cost.

Therefore, the invention aims to provide a stable and reliable heating method by continuing to use a compressor, a piping and some associated valves of an existing air-conditioning system and by means of a refrigerant circuit on the basis of the existing system, which does not need to add an additional positive temperature coefficient resistance heater and reduces the cost and complexity of the air-conditioning system.

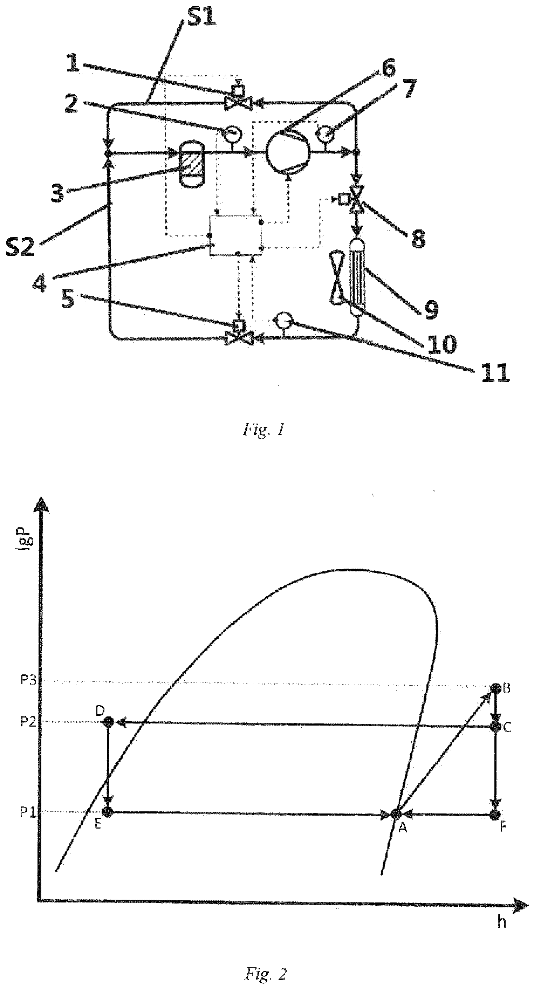

In view of the above-mentioned problems, the invention provides an electric vehicle cabin heating system and a control method therefor, and the system can be integrated with an existing air conditioner with a cooling function only or a heat pump air-conditioning system of an electric vehicle; In the figures, Fig. 1 is a schematic diagram of the air conditioning and heating system of the invention; and Fig. 2 is a schematic diagram of a cycle process of the air conditioning and heating system of the invention. The figures show: a first electronic expansion valve 1, a first sensor 2, a gas-liquid separator 3, a control unit 4, a second electronic an expansion valve 5, a compressor 6, a second sensor 7, a third electronic expansion valve 8, a condenser 9, an air blower 10 and a third sensor 11; a first refrigerant circuit S1; and a second refrigerant circuit S2.

As shown in Fig. 1, the invention provides an electric vehicle cabin heating system, comprising: a first refrigerant circuit S1 and a second refrigerant circuit S2 that are connected in parallel.

The first refrigerant circuit S1 and the second refrigerant circuit S2 each comprise: a gas-liquid separator 3 and a compressor 6 that are connected in series.

The first refrigerant circuit S1 further comprises: a first expansion unit.

The second refrigerant circuit S2 further comprises: a second expansion unit and a condenser 9.

The first expansion unit is connected to the second expansion unit and the condenser 9 in parallel.

Further, a refrigerant in the second refrigerant circuit S2 undergoes pressure regulation via the second expansion unit and then enters the condenser 9 to release heat for heating the cabin.

After the refrigerant in the first refrigerant circuit S1 undergoes throttling and pressure reduction via the first expansion unit and converges with the refrigerant in the second refrigerant circuit S2 in the gas-liquid separator 3, the converging refrigerant enters the compressor 6 for cycling.

The system achieves rapid cabin heating and stable control of heating capacity in a large range are achieved under a low-temperature working condition by means of cycling of the refrigerant circuits, eliminating the dependence of an electric vehicle air-conditioning system on a positive temperature coefficient resistance heater, simplifying the structure of the air-conditioning system, and reducing the cost.

The compressor 6 is the only energy input of the whole system, and according to the law of energy conservation, the amount of heat exchange between the air in the cabin and the condenser 9 is equal to the input power of the compressor 6 minus the heat loss of a compressor 6 body and a pipeline. Also, the power of the compressor 6 itself is only related to the suction and exhaust states and the rotation speed of the compressor itself. Therefore, the heating capacity of the system may be regulated in a wide range by simultaneously regulating the suction and exhaust pressures and the rotation speed of the compressor 6 according to the performance characteristic curve of the compressor 6, which may not only meet the demand for high heating capacity under the condition of low-temperature start and may also cover the steady heating capacity condition with a relatively small load.

Further, the cabin heating system further comprises: a control unit 4 and a sensing unit.

The control unit 4 is connected to the compressor 6, the first expansion unit, the second expansion unit and the sensing unit respectively, and controls the rotation speed of the compressor 6 and the opening degrees of the first expansion unit and the second expansion unit by means of a signal sent by the sensing unit.

Further, the cabin heating system comprises a plurality of the sensing units respectively disposed on the first refrigerant circuit S1 and on the second refrigerant circuit S2.

Preferably, the sensing unit comprises: a first sensor 2, a second sensor 7 and a third sensor 11.

The first sensor 2 is disposed between the gas-liquid separator 3 and the compressor 6, the second sensor 7 is disposed between the compressor 6 and the first expansion unit, and the third sensor 11 is disposed between the condenser 9 and the second expansion unit.

Further, the first expansion unit comprises: a first electronic expansion valve 1.

The first electronic expansion valve 1 is disposed on the first refrigerant circuit S1 and connected to the first refrigerant circuit S1 in series.

The second expansion unit comprises: a second electronic expansion valve 5 and a third electronic expansion valve 8.

The second electronic expansion valve 5 and the third electronic expansion valve 8 are disposed on the second refrigerant circuit S2 and connected to the second refrigerant circuit S2 in series.

The control unit 4 may quickly regulate the inlet and outlet pressures of the compressor 6 to target values by controlling the opening degrees of the first electronic expansion valve 1 and the third electronic expansion valve 8 at an outlet of the compressor 6, and in this case, the input power of the compressor 6 is controlled by the rotation speed thereof.

Further, the cabin heating system further comprises: an air cycle unit;
The air cycle unit is disposed on one side of the condenser 9 for cycling the air in the cabin into the condenser 9 for heating.

Preferably, the air cycle unit is an air blower 10 and/or any apparatus capable of providing an air cycling function.

When the air inflow quantity of the condenser 9 changes due to different gears of the blower 10, a refrigerant pressure state at the outlet of the compressor 6 may be regulated according to the opening degrees of the third electronic expansion valve 8 and the second electronic expansion valve 5, thereby avoiding the influence of the air quantity and the air temperature on cycle establishment and the heating quantity, the system has a strong stability, and the heating quantity may be regulated independently of inlet air quantity and temperature; In addition, under the same heating capacity demand, different rotation speeds and high-low pressure states of the compressor 6 may be selected according to different vibration noise requirements and heat loss conditions.

Furthermore, different from a heat pump system, the system of the invention does not have the process of absorbing heat from the ambient air, and thus achieving the decoupling between the regulation of system heating capacity and the temperatures and flow rate of the exterior ambient air and the cabin air, and the regulation flexibility and the heat regulation range equivalent to those of positive temperature coefficient resistors.

As shown in Fig. 2, the schematic diagram of a cycle process of the air conditioning and heating system is provided,
wherein the state of the refrigerant at the inlet of the compressor 6 is represented by A, and the pressure is represented by P1; after passing through the compressor 6, the refrigerant is compressed to a high-temperature and high-pressure superheated steam in a state B, the pressure rises to P3, and the refrigerant is then divided into two streams; one stream of the refrigerant is converted to a low-temperature and low-pressure superheated steam in a state F by means of throttling and pressure reduction by the first electronic expansion valve 1, and the pressure is reduced to P1; the other stream of the refrigerant is converted to a medium-temperature and medium-pressure superheated steam in a state C by means of throttling and pressure reduction via the third electronic expansion valve 8, and the pressure is reduced to P2.

After entering the condenser 9, the medium-temperature and medium-pressure superheated steam in the state C is condensed to release heat and is converted to a medium-temperature and medium-pressure subcooled refrigerant liquid in a state D. The medium-temperature and medium-pressure subcooled refrigerant liquid in the D state becomes into a low-temperature and low-pressure gas-liquid two-phase refrigerant in an E state by means of throttling by the second electronic expansion valve 5, the pressure is reduced to P1, the refrigerant is mixed with a low-temperature and low-pressure superheated steam in an F state in the gas-liquid separator to become the low-temperature and low-pressure saturated steam in the A state, and said saturated steam then enters the compressor again to complete one cycle.

In comparison with a conventional heat pump cycle, the process of the low-temperature and low-pressure gas-liquid two-phase refrigerant absorbing heat to be evaporated into a low-temperature and low-pressure superheated steam state in the evaporator is omitted in the heating system cycle of the invention, and the low-temperature and low-pressure gas-liquid two-phase refrigerant in the E state the low-temperature and low-pressure superheated refrigerant steam in the F state are directly mixed to a saturated steam state A in the gas-liquid separator 3 by regulating the first electronic expansion valve 1, the second electronic expansion valve 5 and the third electronic expansion valve 8, and then the mixed refrigerant enters the compressor 6.

Therefore, the heating cycle of the invention may be stably provide the heating capacity within the operating temperature range supported by a unit of the compressor 6 without the influence from the ambient temperature.

Moreover, the invention introduces an intermediate pressure P2 by means of the throttling action of the second electronic expansion valve 5 and the third electronic expansion valve 8, such that the heating capacity of the system is not affected by the flow rate of air flowing through the condenser 9 and the temperature, but is only related to a high pressure P3, a low pressure P1 and the rotation speed of the compressor.

Thus, the system may achieve the decoupling between the regulation of heating capacity and the temperatures and flow rate of the exterior ambient air and the cabin air.

The invention further provides a control method for the electric vehicle cabin heating system, method comprises:
the first expansion unit and the second expansion unit receiving data fed back by the sensing unit;
performing determination according to the data; and
regulating the opening degrees of the first expansion unit and the second expansion unit according to a determination result.

The method controls target high and low pressures of the system by regulating the first and second expansion units and the rotation speed of the compressor so as to achieve the decoupling between the regulation of system heating capacity and the temperatures and flow rate of the exterior ambient air and the cabin air, achieves the regulation flexibility and the heat regulation range equivalent to those of positive temperature coefficient resistors, and solves or improves the problems of insufficient heating capacity and frequent defrosting of a heat pump system at a low temperature to some extent.

Once again, as shown in Fig. 1, the compressor 6 serves as the sole energy input in the whole heating system, the power thereof minus the heat loss of its own housing and pipeline is the capacity for heating the cabin air by the condenser 9, while the power of the compressor 6 depends on the high and low pressures at the inlet and outlet thereof and the rotation speed.

Under a high heating capacity demand, the system may calculate target values of high and low pressures and corresponding compressor rotation speeds according to the heating capacity demand and the performance characteristic curve of the compressor 6. The control unit 4 gives the compressor 6 a high rotation speed target, for example: 10000 rpm, a higher low-pressure target value of the first electronic expansion valve 1, for example: 5 barA, and a higher high-pressure target value of the third electronic expansion valve 8, for example: 25 barA.

Further, regulating the opening degrees of the first expansion unit and the second expansion unit according to a determination result comprises:
when the low pressure at the inlet of the compressor 6 fed back by the first sensor 2 is lower than the low-pressure target value, increasing the opening degree of the first electronic expansion valve 1, and otherwise decreasing it, until the pressure at the inlet of the compressor 6 is stabilized to the low-pressure target value; and
when the high pressure at the outlet of the compressor 6 fed back by the second sensor 7 is lower than the high-pressure target value, decreasing the opening degree of the third electronic expansion valve 8, and otherwise increasing it, until the pressure at the outlet of the compressor 6 is stabilized to the high-pressure target value.

When the refrigerant subcooling degree at the outlet of the condenser 9 fed back by the third sensor 11 is lower than a subcooling degree target value, decreasing the opening degree of the second electronic expansion valve 5, and otherwise increasing it; until the refrigerant subcooling degree at the outlet of the condenser 9 reaches a target value, for example: 5 degrees.

In this case, since the compressor 6 works at a high rotation speed and a high specific volume of suction and in a high-pressure ratio state and consumes high electric power, the amount of heat of the air flowing through the condenser 9 is large, and the heating capacity of the system is high.

The invention introduces the intermediate pressure P2 by means of the throttling action of the third electronic expansion valve 8, and after the second electronic expansion valve 5 and the third electronic expansion valve 8 are regulated, different air flow rates through the condenser 9 and temperatures will correspond to different P2 values and are unrelated to the inlet and outlet pressures P1 and P3 of the compressor 6, and finally the decoupling between the regulation of system heating capacity and the temperatures and flow rate of the exterior ambient air and the cabin air is achieved.

When the heating capacity needs to be regulated, the electric vehicle air conditioning and heating system of the invention may flexibly regulate the heating capacity of the system by various means without the influence from environmental factors, achieving the regulation flexibility and heat regulation range equivalent to those of the positive temperature coefficient resistors.

It should be noted that: when the heating capacity demand decreases, the system of the invention may regulate the heating capacity mainly in three ways:
I, in a situation where noise and vibration requirements are high: for example, in idling, in order to reduce the noise and vibration influence of the compressor 6 on the cabin, the rotation speed of the compressor may be reduced by continuing to maintain higher target values of the high and low pressures at the inlet and outlet of the compressor 6, and in this case, the refrigerant cycling flow rate decreases, and the heating capacity of the system accordingly decreases;
II, in a situation where the air temperature is low and the noise and vibration requirements are low: the target values of the high and low pressures at the inlet and outlet of the compressor 6 may be reduced while maintaining a higher rotation speed of the compressor 6 to reduce the heat loss of a housing of the compressor 6 and the high and low pressure pipelines;
III, when the heating system of the invention is integrated into a heat pump system: after rapid temperature rise of the cabin is performed by using the system, if the heat pump cycle may meet the current steady heating capacity demand, the control unit 4 may regulate high and low pressure levels to a heat pump working state point and is then smoothly switched to the heat pump cycle, namely, the heating system of the invention performs the rapid temperature rise and is then switched to the heat pump system to achieve the energy-saving operation of the air-conditioning system, achieving the same regulation effect as the effect of the positive temperature coefficient resistance heater.

In the description of the invention, unless otherwise specified, the term "a plurality" means two or more; the terms that indicate the orientational or positional relationship, such as "upper", "lower", "left", "right", "inner", "outer", "front end", "rear end", "head portion" and "tail portion", are on the basis of the orientational or positional relationships shown in the figures, which are merely for ease of description of the invention and simplified description, instead of indicating or implying that the apparatus or element must have a particular orientation and be constructed and operated in a particular orientation, and therefore, should not be construed as limiting the invention. In addition, the terms "first", "second" and "third" are for descriptive purposes only and should not be construed as indicating or implying relative importance.

In the description of the invention, it should be noted that unless otherwise explicitly specified and defined, the terms "connection" and "attaching" should be understood in a broad sense, for example, they may be fixed connection, detachable connection, or integrated connection; may mean a mechanical connection or an electrical connection; and may mean a direct connection and also be indirect connection via an intermediate medium. For those of ordinary skills in the art, the specific meaning of the terms mentioned above in the invention may be construed according to specific circumstances.

## Claims

1. An electric vehicle cabin heating system, the electric vehicle cabin heating system is an air conditioning and heating system, comprising: a first refrigerant circuit (S1) and a second refrigerant circuit (S2) that are connected in parallel, the first refrigerant circuit (S1) and the second refrigerant circuit (S2) each comprise: a gas-liquid separator (3) and a compressor (6) that are connected in series;
wherein, the first refrigerant circuit (S1) further comprises: a first expansion unit; the second refrigerant circuit (S2) further comprises: a second expansion unit and a condenser (9); the first expansion unit is connected to the second expansion unit and the condenser (9) in parallel; **characterised in that**
the second expansion unit comprises a second electronic expansion valve (5) and a third electronic expansion valve (8), the third electronic expansion valve (8) is arranged upstream of the condenser (9), and the second electronic expansion valve (5) is arranged downstream of the condenser (9); and
the electric vehicle cabin heating system is configured as a refrigerant in the second refrigerant circuit (S2) undergoes pressure regulation via the third electronic expansion valve (8) and then enters the condenser (9) to release heat for heating a cabin, and after the refrigerant released heat undergoing throttling via the second electronic expansion valve (5), it converges with the refrigerant which undergoes throttling and pressure reduction via the first expansion unit in the first refrigerant circuit (S1) in the gas-liquid separator (3), the converging refrigerant enters the compressor (6) for cycling.

2. The electric vehicle cabin heating system of claim 1, further comprising: a control unit (4) and a sensing unit, wherein
the control unit (4) is connected to the compressor (6), the first expansion unit, the second expansion unit and the sensing unit, respectively, and controls the rotation speed of the compressor (6) and the opening degrees of the first expansion unit and the second expansion unit by means of a signal sent by the sensing unit.

3. The electric vehicle cabin heating system of claim 1, further comprising a plurality of the sensing units respectively disposed on the first refrigerant circuit (S1) and the second refrigerant circuit (S2).

4. The electric vehicle cabin heating system of claim 3, wherein the sensing unit comprises: a first sensor (2), a second sensor (7) and a third sensor (11); and
the first sensor (2) is disposed between the gas-liquid separator (3) and the compressor (6), the second sensor (7) is disposed between the compressor (6) and the first expansion unit, and the third sensor (11) is disposed between the condenser (9) and the second expansion unit.

5. The electric vehicle cabin heating system of claim 1, wherein the first expansion unit comprises
: a first electronic expansion valve (1).

6. The electric vehicle cabin heating system of claim 1, further comprising: an air cycle unit,
the air cycle unit being disposed on one side of the condenser (9) for cycling air in the cabin into the condenser (9) for heating.

7. The electric vehicle cabin heating system of claim 6, wherein the air cycle unit is an air blower (10).

8. A control method for the electric vehicle cabin heating system of any one of claims 1-7, wherein the control method comprises:
the first expansion unit and the second expansion unit receiving data fed back by a sensing unit;
performing of a determination result according to the data; and
regulating the opening degrees of the first expansion unit and the second expansion unit according to the determination result.

9. The control method of claim 8, wherein regulating the opening degrees of the first expansion unit and the second expansion unit according to a determination result comprises:
when a low pressure at an inlet of the compressor (6) fed back by the first sensor (2) is lower than a low-pressure target value, increasing the opening degree of the first electronic expansion valve (1), and otherwise decreasing it;
when a high pressure at an outlet of the compressor (6) fed back by the second sensor (7) is lower than a high-pressure target value, decreasing the opening degree of the third electronic expansion valve (8), and otherwise increasing it; and
when the refrigerant subcooling degree at the outlet of the condenser (9) fed back by the third sensor (11) is lower than a subcooling degree target value, decreasing the opening degree of the second electronic expansion valve (5), and otherwise increasing it.

## Patentansprüche

1. System zum Heizen der Kabine eines Elektrofahrzeugs, wobei das System zum Heizen der Kabine eines Elektrofahrzeugs ein Klimatisierungs- und Heizsystem ist, das Folgendes umfasst: einen ersten Kühlmittelkreis (S1) und einen zweiten Kühlmittelkreis (S2), die parallel geschaltet sind, wobei der erste Kühlmittelkreis (S1) und der zweite Kühlmittelkreis (S2) jeweils Folgendes umfassen: einen Gas-Flüssigkeit-Abscheider (3) und einen Kompressor (6), die in Reihe geschaltet sind,
wobei der erste Kühlmittelkreis (S1) ferner Folgendes umfasst: eine erste Expansionseinheit, der zweite Kühlmittelkreis (S2) ferner Folgendes umfasst: eine zweite Expansionseinheit und einen Kondensator (9) umfasst, wobei die erste Expansionseinheit mit der zweiten Expansionseinheit und dem Kondensator (9) parallel geschaltet ist,
**dadurch gekennzeichnet, dass** die zweite Expansionseinheit ein zweites elektronisches Expansionsventil (5) und ein drittes Expansionsventil (8) umfasst, wobei das dritte elektronische Expansionsventil (8) prozessaufwärts des Kondensators (9) angeordnet ist und das zweite elektronische Expansionsventil (5) prozessabwärts des Kondensators (9) angeordnet ist, und
das System zum Heizen der Kabine eines Elektrofahrzeugs derart gestaltet ist, dass, wenn ein Kühlmittel in dem zweiten Kühlmittelkreis (S2) einer Druckregelung mittels des dritten elektronischen Expansionsventils (8) unterzogen wird und dann in den Kondensator (9) eintritt, um Wärme zum Heizen einer Kabine freizusetzen, und nachdem das Kühlmittel, das Wärme freigesetzt hat, einer Drosselung mittels des zweiten elektronischen Expansionsventils (5) unterzogen wurde, es mit dem Kühlmittel zusammenläuft, das einer Drosselung und Druckreduktion mittels der ersten Expansionseinheit in dem ersten Kühlmittelkreis (S1) in dem Gas-Flüssigkeit-Abscheider (3) unterzogen wird, wobei das zusammenlaufende Kühlmittel zum Umwälzen in den Kompressor (6) eintritt.

2. System zum Heizen der Kabine eines Elektrofahrzeugs nach Anspruch 1, das ferner Folgendes umfasst: eine Steuereinheit (4) und eine Abtasteinheit, wobei
die Steuereinheit (4) mit dem Kompressor (6), der ersten Expansionseinheit, der zweiten Expansionseinheit beziehungsweise der Abtasteinheit verbunden ist und die Drehzahl des Kompressors (6) und die Öffnungsgrade der ersten Expansionseinheit und der zweiten Expansionseinheit mittels eines Signals steuert, das von der Abtasteinheit gesendet wird.

3. System zum Heizen der Kabine eines Elektrofahrzeugs nach Anspruch 1, ferner mehrere Abtasteinheiten umfassend, die an dem ersten Kühlmittelkreis (S1) beziehungsweise dem zweiten Kühlmittelkreis (S2) angeordnet sind.

4. System zum Heizen der Kabine eines Elektrofahrzeugs nach Anspruch 3, wobei die Abtasteinheit Folgendes umfasst: einen ersten Sensor (2), einen zweiten Sensor (7) und einen dritten Sensor (11), und
der erste Sensor (2) zwischen dem Gas-Flüssigkeit-Abscheider (3) und dem Kompressor (6) angeordnet ist, der zweite Sensor (7) zwischen dem Kompressor (6) und der ersten Expansionseinheit angeordnet ist und der dritte Sensor (11) zwischen dem Kondensator (9) und der zweiten Expansionseinheit angeordnet ist.

5. System zum Heizen der Kabine eines Elektrofahrzeugs nach Anspruch 1, wobei die erste Expansionseinheit Folgendes umfasst: ein erstes elektronisches Expansionsventil (1) umfasst.

6. System zum Heizen der Kabine eines Elektrofahrzeugs nach Anspruch 1, das ferner Folgendes umfasst: eine Luftumwälzeinheit,
wobei die Luftumwälzeinheit an einer Seite des Kondensators (9) angeordnet ist, um Luft in der Kabine in den Kondensator (9) zum Heizen umzuwälzen.

7. System zum Heizen der Kabine eines Elektrofahrzeugs nach Anspruch 6, wobei die Luftumwälzeinheit ein Luftgebläse (10) ist.

8. Verfahren zum Steuern des Systems zum Heizen der Kabine eines Elektrofahrzeugs nach einem der Ansprüche 1 bis 7, wobei das Steuerverfahren Folgendes umfasst:
Empfangen von Daten durch die erste Expansionseinheit und die zweite Expansionseinheit, die von einer Abtasteinheit rückgemeldet werden,
Durchführen eines Bestimmungsergebnisses gemäß den Daten und
Regeln der Öffnungsgrade der ersten Expansionseinheit und der zweiten Expansionseinheit gemäß dem Bestimmungsergebnis.

9. Steuerverfahren nach Anspruch 8, wobei das Regeln der Öffnungsgrade der ersten Expansionseinheit und der zweiten Expansionseinheit gemäß dem Bestimmungsergebnis Folgendes umfasst:
Vergrößern des Öffnungsgrades des ersten elektronischen Expansionsventils (1), wenn ein niedriger Druck an einem Einlass des Kompressors (6), der durch den ersten Sensor (2) rückgemeldet wird, niedriger als ein Niederdruck-Sollwert ist, sonst Verkleinern desselben,
Verkleinern des Öffnungsgrades des dritten elektronischen Expansionsventils (8), wenn ein hoher Druck an einem Auslass des Kompressors (6), der durch den zweiten Sensor (7) rückgemeldet wird, höher als ein Hochdruck-Sollwert ist, und sonst Vergrößern desselben, und
Verkleinern des Öffnungsgrades des zweiten elektronischen Expansionsventils (5), wenn der Kühlmittel-Teilkühlungsgrad am Auslass des Kondensators (9), der durch den dritten Sensor (11) rückgemeldet wird, kleiner als ein Teilkühlungsgrad-Sollwert ist, und sonst Vergrößern desselben.

## Revendications

1. Système de chauffage d'habitacle de véhicule électrique, le système de chauffage d'habitacle de véhicule électrique étant un système de climatisation et de chauffage, comportant : un premier circuit (S1) de frigorigène et un deuxième circuit (S2) de frigorigène qui sont branchés en parallèle, le premier circuit (S1) de frigorigène et le deuxième circuit (S2) de frigorigène comportant chacun : un séparateur gaz-liquide (3) et un compresseur (6) qui sont branchés en série ;
le premier circuit (S1) de frigorigène comportant en outre : une première unité de détente ; le deuxième circuit (S2) de frigorigène comportant en outre : une deuxième unité de détente et un condenseur (9) ; la première unité de détente étant reliée en parallèle à la deuxième unité de détente et au condenseur (9) ; **caractérisé en ce que**
la deuxième unité de détente comporte un deuxième détendeur électronique (5) et un troisième détendeur électronique (8), le troisième détendeur électronique (8) étant placé en amont du condenseur (9), et le deuxième détendeur électronique (5) étant placé en aval du condenseur (9) ; et
le système de chauffage d'habitacle de véhicule électrique est configuré, tandis qu'un frigorigène dans le deuxième circuit (S2) de frigorigène subit une régulation de pression par l'intermédiaire du troisième détendeur électronique (8) puis entre dans le condenseur (9) pour dégager de la chaleur servant à chauffer un habitacle, et après que le frigorigène a dégagé de la chaleur en subissant un étranglement par l'intermédiaire du deuxième détendeur électronique (5), il converge avec le frigorigène qui subit un étranglement et une réduction de pression par l'intermédiaire de la première unité de détente dans le premier circuit (S1) de frigorigène dans le séparateur gaz-liquide (3), le frigorigène qui converge entre dans le compresseur (6) en vue d'une recirculation.

2. Système de chauffage d'habitacle de véhicule électrique selon la revendication 1, comportant en outre : une unité (4) de commande et une unité de détection,
l'unité (4) de commande étant reliée respectivement au compresseur (6), à la première unité de détente, à la deuxième unité de détente et à l'unité de détection, et commandant la vitesse de rotation du compresseur (6) et les degrés d'ouverture de la première unité de détente et de la deuxième unité de détente au moyen d'un signal émis par l'unité de détection.

3. Système de chauffage d'habitacle de véhicule électrique selon la revendication 1, comportant en outre une pluralité des unités de détection disposées respectivement sur le premier circuit (S1) de frigorigène et le deuxième circuit (S2) de frigorigène.

4. Système de chauffage d'habitacle de véhicule électrique selon la revendication 3, l'unité de détection comportant : un premier capteur (2), un deuxième capteur (7) et un troisième capteur (11) ; et le premier capteur (2) étant disposé entre le séparateur gaz-liquide (3) et le compresseur (6), le deuxième capteur (7) étant disposé entre le compresseur (6) et la première unité de détente, et le troisième capteur (11) étant disposé entre le condenseur (9) et la deuxième unité de détente.

5. Système de chauffage d'habitacle de véhicule électrique selon la revendication 1, la première unité de détente comportant : un premier détendeur électronique (1).

6. Système de chauffage d'habitacle de véhicule électrique selon la revendication 1, comportant en outre : une unité de circulation d'air,
l'unité de circulation d'air étant disposée sur un côté du condenseur (9) pour faire recirculer de l'air présent dans l'habitacle jusque dans le condenseur (9) en vue du chauffage.

7. Système de chauffage d'habitacle de véhicule électrique selon la revendication 6, l'unité de circulation d'air étant une soufflante (10) à air.

8. Procédé de commande du système de chauffage d'habitacle de véhicule électrique selon l'une quelconque des revendications 1 à 7, le procédé de commande comportant :
la réception, par la première unité de détente et la deuxième unité de détente, de données renvoyées par une unité de détection ;
l'obtention d'un résultat de détermination d'après les données ; et
la régulation des degrés d'ouverture de la première unité de détente et de la deuxième unité de détente d'après le résultat de détermination.

9. Procédé de commande selon la revendication 8, la régulation des degrés d'ouverture de la première unité de détente et de la deuxième unité de détente d'après un résultat de détermination comportant :
lorsqu'une basse pression à une entrée du compresseur (6) renvoyée par le premier capteur (2) est inférieure à une valeur cible de basse pression, l'augmentation du degré d'ouverture du premier détendeur électronique (1), et sa diminution si ce n'est pas le cas ;
lorsqu'une haute pression à une sortie du compresseur (6) renvoyée par le deuxième capteur (7) est inférieure à une valeur cible de haute pression, la diminution du degré d'ouverture du troisième détendeur électronique (8), et son augmentation si ce n'est pas le cas ; et
lorsque le degré de sous-refroidissement du frigorigène à la sortie du condenseur (9) renvoyé par le troisième capteur (11) est inférieur à une valeur cible de degré de sous-refroidissement, la diminution du degré d'ouverture du deuxième détendeur électronique (5), et son augmentation si ce n'est pas le cas.
